# EUROPEAN PATENT APPLICATION

(11) **EP 2 511 233 A1**
(43) Date of publication of application: **17.10.2012**
(21) Application number: 10843224.6
(22) Date of filing: 24.12.2010
(51) Int. Cl.: C01B 25/45, H01M 4/58

(54) **METHOD FOR PRODUCING LITHIUM IRON PHOSPHATE**

(30) Priority: 14.01.2010 JP 2010006183
(71) Applicant: JFE Chemical Corporation, Tokyo 111-0051 (JP)
(72) Inventor: TAHARA, Tomoyuki, Tokyo 111-0051 (JP); SAKAI, Minoru, Tokyo 111-0051 (JP)
(74) Representative: HOFFMANN EITLE
(86) International application number: PCT/JP2010/073880
(87) International publication number: WO 2011/086872

(57) **Abstract**

To provide a method for producing lithium iron phosphate possessing a high discharge capacity as an inexpensive positive active material by using inexpensive iron particles as an iron source. The lithium iron phosphate is manufactured by a synthesizing step of adding iron particles containing oxygen to an aqueous solution containing a phosphoric acid, a carboxylic acid and a lithium source, and making the components contained in the aqueous solution and the iron particles react with each other under an oxygen atmosphere; a lithium iron phosphate precursor forming step of drying the reaction liquid obtained in the synthesizing step; and a primary baking step of baking the lithium iron phosphate precursor obtained in the lithium iron phosphate precursor forming step under a non-oxidizing atmosphere, to obtain the lithium iron phosphate.

## Description

### Field of the Invention

The present invention relates to a method for producing a positive active material for a secondary battery represented by a lithium-ion battery, and more particularly to a method for producing lithium iron phosphate.

### Description of the related arts

With respect to miniaturized lithium-ion batteries which have become widespread mainly in the field of mobile apparatuses, the enhancement of the performance has been realized through improvement of negative active material or development of an electrolytic solution or the like. On the other hand, with respect to a positive active material, no remarkable technical innovation has been made up to now from the time that the commercialization of the miniaturized lithium-ion batteries started, and lithium cobaltate (LiCoO₂) which contains expensive rare metal has been mainly used. Besides being expensive, the lithium cobaltate is not sufficient in thermal and chemical stability and emits oxygen under a high temperature of approximately 180°C thus giving rise to a possibility of igniting an organic electrolytic solution whereby safety still remains a drawback.
Accordingly, in the development of the use of lithium-ion batteries which envisages the future use of the lithium-ion battery in a large-sized apparatus, the development of the positive active material which is cheaper than conventionally used lithium cobaltate and is thermally and chemically stable for securing high safety is indispensable.

Currently, a material which is considered promising as a new positive active material capable of replacing the lithium cobaltate is olivine lithium iron phosphate (LiFePO₄, simply referred to as "lithium iron phosphate" hereinafter) which is an iron-based active material and exhibits high safety in addition to less restriction in terms of resource problems and less toxicity. The lithium iron phosphate is a highly safe active material since the lithium iron phosphate does not emit oxygen up to approximately 400°C because of strong P-O bonding in the crystalline structure, and is also an active material which exhibits excellent long-period stability and rapid charge characteristics.

In using the lithium iron phosphate as the positive active material, to allow the lithium iron phosphate to secure a high-speed charge/discharge characteristic which is a characteristic that the positive active material is requested to satisfy, it is necessary to improve the electron conduction of the lithium iron phosphate and shorten a diffusion distance of lithium ions.
As a measure to cope with such problems, it is considered effective to cover surfaces of lithium iron phosphate particles with an electric conductive material and form the lithium iron phosphate particles into fine particles (approximately 100 nm or less) thus increasing the reaction surface area. Further, it has been also reported that doping the lithium iron phosphate with other elements is effective in improving electron conduction and stabilization of the crystalline structure.

Accordingly, as described above, development of a method for producing fine lithium iron phosphate particles whose surfaces are covered with the electric conductive material stably at a low cost becomes important to realize the practical use of the lithium iron phosphate as the positive active material.

As a method for synthesizing the lithium iron phosphate aimed at lowering of cost, a method which uses inexpensive iron particles as an iron source has been known.
For example, in patent document 1, there is disclosed a method where metallic iron and a compound liberating a phosphoric acid ion are reacted first with each other in an aqueous solution and, thereafter, lithium carbonate or lithium hydroxide is added to the aqueous solution to prepare a precursor of the lithium iron phosphate and the precursor is dried, the dried material is subject to primary baking at a temperature within a temperature range from 300 to 450°C, and a substance from which conductive carbon is formed by thermo decomposition is added to the baking material, and the mixture is baked at a temperature of 500 to 800°C.

However, in the above-mentioned method described in patent document 1, since the metallic iron of high purity of 99.9% or more reacts with a phosphoric acid in preparing the precursor, aggregate particles of iron phosphate (Fe₃(PO₄)₂·8H₂O) which are a sparingly soluble bivalent iron compound are formed and grown and a solution becomes a creamy high-viscosity material which exhibits color ranging from white to light blue. As a result, agitation of the solution becomes insufficient thus giving rise to drawbacks including a drawback that unreacted metallic iron is liable to remain and a drawback that raw materials are not uniformly mixed with each other. Further, also in the method disclosed in patent document 1, an acid such as a hydrochloric acid or an oxalic acid is added so as to promote a reaction of the unreacted metallic iron. However, when the hydrochloric acid is added, a product is liable to be oxidized, while when the oxalic acid is added, it is difficult to uniformly prepare the precursor due to the formation of stable iron oxalate as a deposit in the form of a single body or the like. Further, it is difficult to uniformly mix carbon black or the like which is added as the conductive carbon to the precursor at an atomic level. Hence, the effect of the carbon black or the like as a reducing agent is small in the temperature range of the primary baking where the precursor is liable to be oxidized.

Patent document 2 discloses a method in which iron powder, a lithium salt and a phosphate compound are dissolved in an organic acid aqueous solution to prepare a precursor and, then, the precursor is dried by spraying and, thereafter, a dried material is baked at a temperature of 500°C or more.
However, the above-mentioned method described in patent document 2 has a drawback that although an effective bivalent iron can be formed by oxidizing iron with an organic acid or a mixed organic acid, it is difficult to make the bivalent iron present in a stable state. Further, when the lithium salt is lithium nitrate, nitrate ion acts as an oxidant at the time of baking. Further, although it may be possible to use lithium acetate as the lithium salt, the lithium acetate is an expensive raw material. Hence, use of the lithium acetate is not effective in lowering cost. Further, although organic compounds which generate pyrolytic carbon are mixed in a precursor solution in the above-mentioned method, some organic compounds are carbonized alone at the time of baking so that the surfaces of the lithium iron phosphate particles cannot be effectively covered with the pyrolytic carbon.

Patent document 3 describes a method where iron powder first reacted in an aqueous solution containing a phosphoric acid and a citric acid, lithium hydroxide is added to the aqueous solution and, then, a precursor is prepared by adding metal oxide or a metal salt which is changed to conductive oxide by baking to the aqueous solution, and the precursor is dried and, finally, a dried product of the precursor is baked.
However, in the above-mentioned method, the citric acid does not effectively act as a chelating agent when the iron powder reacts with the phosphoric acid so that iron in the precursor is oxidized to trivalence to form ferric phosphate which is a trivalent iron compound. Further, the method describes an example where vanadium oxide V₂O₅ is added as the conductive oxide. However, in this method, the vanadium oxide is added after the formation of the precursor of lithium iron phosphate. Hence, doping of vanadium is not effected and vanadium adheres to peripheries of the lithium iron phosphate particles.

Patent document 4 describes a method for producing lithium iron phosphate for a batteries where the lithium iron phosphate is formed by baking a mixture which contains iron powder having an average particle size of 20 to 150 µm and apparent density of 2 g/cm³ or less, a phosphate compound and a lithium compound.
However, the method described in patent document 4 also, in the same manner as the method described in patent document 2, has a drawback that it is difficult to make the bivalent iron present in a stable state.

### Prior art literature

### Patent document

Patent document 1 W02004/036671
Patent document 2 JP-A-2006-131485
Patent document 3 JP-A-2007-305585
Patent document 4 JP-A-2008-4317

### Summary of the Invention

### Problems to be solved by the Invention

As described above, when iron particles are used as an iron source in a method for synthesizing lithium iron phosphate, the prior art cannot sufficiently control the reaction of iron particles. Accordingly, due to a reason that unreacted iron particles remain, a reason that the oxidation of iron excessively progresses so that a crystalline trivalent iron compound is formed or the like, a precursor of the lithium iron phosphate cannot be uniformly mixed and prepared at an atomic level whereby the lithium iron phosphate which is obtained as a final product cannot secure a sufficient discharge capacity. Further, in improving various characteristics of the lithium iron phosphate by doping lithium iron phosphate with other elements, the prior art cannot dope the lithium iron phosphate with other elements uniformly.
The present invention has been made under such circumstances, and it is an object of the present invention to provide a method for producing in a stale manner lithium iron phosphate which can acquire a positive active material made of inexpensive lithium iron phosphate possessing a high discharge capacity by preparing a precursor of the lithium iron phosphate where components are uniformly mixed at an atomic level by controlling a reaction of iron particles.

### Means for solving the problems

Inventors of the present invention have made extensive studies to solve the above-mentioned problems. As a result, the inventors have made a finding that, in producing high-performance lithium iron phosphate having a high discharge capacity as a positive active material using an inexpensive iron particle raw material, it is effective to determine an amount of oxygen chemically bonded to iron particles, to allow a carboxylic acid and a lithium source to coexist when the iron particles and the phosphoric acid are made to react with each other, and to cause the reaction in an oxidizing atmosphere. The inventors also have made a finding that a chelate substance of the lithium iron phosphate which uniformly disperses in an aqueous solution is obtained by the above-mentioned reaction, and by drying the chelate substance of the lithium iron phosphate, a precursor of the lithium iron phosphate in which raw materials are uniformly mixed at an atomic level is obtained. Further, the inventors have found that, in improving various characteristics of the lithium iron phosphate by doping the lithium iron phosphate with other elements, by adding elements to be doped to an aqueous solution which contains a phosphoric acid, a carboxylic acid and a lithium source, the lithium iron phosphate which is uniformly doped with the elements can be obtained.

The present invention has been made based on such findings, and the gist of the present invention is as follows.
(1) A method for producing lithium iron phosphate including:
   a synthesizing step of adding iron particles containing 0.5 mass% or more of oxygen to an aqueous solution containing a phosphoric acid, a carboxylic acid and a lithium source, and by causing components contained in the aqueous solution and the iron particles to react with each other under an oxidizing atmosphere, and thereby form a reaction liquid;
   a precursor forming step of drying the reaction liquid obtained in the synthesizing step, to form a lithium iron phosphate precursor; and
   a primary baking step of baking the lithium iron phosphate precursor obtained in the precursor forming step under a non-oxidizing atmosphere thus obtaining the lithium iron phosphate.

(2) The method described in the above-mentioned (1), further includes a secondary baking step of mixing the lithium iron phosphate obtained in the primary baking step and a carbon source, and baking the mixture under a non-oxidizing atmosphere thus obtaining lithium iron phosphate whose surface is covered with carbon.

(3) The method described in the above-mentioned (1) or (2), wherein a content of the carboxylic acid is 0.18 to 0.5 mol for 1 mol of iron in the iron particles.

(4) The method described in any one of the above-mentioned (1) to (3), wherein a residual carbon rate of the carboxylic acid is 3 mass% or more.

(5) The method described in any one of the above-mentioned (1) to (4), wherein the carboxylic acid is at least one selected from the group consisting of a tartaric acid, a malic acid and a citric acid.

(6) The method described in any one of the above-mentioned (1) to (5), wherein metal or a compound which is an element to be doped is dissolved in the aqueous solution containing the phosphoric acid, the carboxylic acid and the lithium source in advance.

(7) The method described in any one of the above-mentioned (1) to (6), wherein the lithium iron phosphate is a positive active material for a secondary battery.

### Advantages of the Invention

According to the present invention, it is possible to produce lithium iron phosphate excellent in high-speed charge/discharge characteristics which are important characteristics to be satisfied by a positive active material at a low cost and in a stable manner.

### Embodiments for Carrying out the Invention

The present invention is explained in detail hereinafter.
A method for producing lithium iron phosphate according to the present invention includes:
a synthesizing step of adding iron particles containing 0.5 mass% or more of oxygen to an aqueous solution containing a phosphoric acid, a carboxylic acid and a lithium source, and making the components contained in the aqueous solution and the iron particles react with each other under an oxidizing atmosphere, to form a reaction liquid;
a precursor forming step of drying the reaction liquid obtained in the synthesizing step, to form a lithium iron phosphate precursor; and
a primary baking step of baking the lithium iron phosphate precursor obtained in the precursor forming step under a non-oxidizing atmosphere, to obtain the lithium iron phosphate.

As the iron particles, it is possible to use reduced iron powder which is produced by reducing mill scales (ferric oxide) using coke, atomized iron powder which is produced by pulverizing and cooling molten steel using highly-pressurized water, electrolytic iron powder which is produced by precipitating on an anode by applying electrolysis to an aqueous ferric salt solution or the like. An average particle size of the iron powder may preferably be set to 100 µm or less. Although an average particle size of ordinary general-industry-use iron powder is 70 to 80 µm, the ordinary general-industry-use iron powder contains particles having a maximum particle size of 150 to 180 µm. Accordingly, the use of the iron powder after increasing a reaction surface by removing coarse particles using a sieve or turning the coarse particles into fine particles by mechanical milling or the like when necessary is advantageous for synthesizing chelate substances of the lithium iron phosphate while promoting a subsequent reaction of the iron powder with the phosphoric acid, the carboxylic acid and the lithium source.

In the present invention, the oxygen contained in the iron powder indicates oxygen which is chemically bonded to iron. It is a prerequisite that oxygen content is 0.5 mass% or more for synthesizing the chelate substances of the lithium iron phosphate. The oxygen content may preferably be 0.6 to 2 mass%. When the oxygen content of the iron particles is less than 0.5 mass%, priority is assigned to a direct reaction between metallic iron and the phosphoric acid so that aggregate particles of iron phosphate (Fe₃(PO₄)₂·8H₂O) which are a sparingly soluble bivalent iron compound are formed and grown whereby the solution becomes a creamy high-viscosity material which exhibits color ranging from white to light blue. As a result, the agitation of the aqueous solution becomes insufficient thus giving rise to drawbacks including a drawback that unreacted metallic iron is liable to remain and a drawback that raw materials are not uniformly mixed with each other. When the oxygen content of the iron particles is 2 mass% or less, there is no segregation of scales of ferric oxide on surfaces of the iron powder whereby the reaction between the iron powder and the aqueous solution of the phosphoric acid and the carboxylic acid is not impeded. Accordingly, the oxygen content of the iron particles may preferably be 2 mass% or less. The determination of the oxygen content in the iron particles is performed in accordance with a vacuum melting infrared absorbing method stipulated in JIS Z 613 (1992) using TC436 made by LECO Corporation.

To set the oxygen content of the iron particles to 0.5 mass% or more, in a case where the reduced iron powder is used as a raw material, for example, a temperature at which the mill scales (ferric oxide) are reduced using coke may be set to a temperature (about 800 to 1000°C) which is lower than a usual temperature (1000 to 1200°C).
Further, to use water atomized iron powder as a raw material, molten steel is pulverized and cooled using highly pressurized water and, thereafter, pulverized steel may be positively brought into contact with air in a drying step.
To elevate purity of the iron particles, usually, raw-material iron powder is subject to hydrogen reduction thus producing iron particles having oxygen content of approximately 0.4 mass% or less. Accordingly, the iron particles used in the present invention may be produced by adjusting the degree of hydrogen reduction.

The phosphoric acid may preferably be an aqueous solution of an orthophosphoric acid (H₃PO₄). However, an aqueous solution of higher-order condensed phosphoric acid (Hₙ₊₂PₙO₃ₙ₊₁) may be also used as the phosphoric acid. The orthophosphoric acid which amounts to 75 to 85 mass% can be usually used as an industrial product. An addition amount of the phosphoric acid is 1 mol for 1 mol of iron in terms of a stoichiometric equivalent. However, there is no problem even when the addition amount of the phosphoric acid exceeds 1 mol by approximately 0.1 mol.

The carboxylic acid indicates an organic compound having a carboxyl group, and functions as a chelating agent at the time of synthesizing the chelate substances of the lithium iron phosphate. As the above-mentioned carboxylic acid used in the present invention, a carboxylic acid which exhibits a strong chelating force for iron, for example, a tartaric acid, a malic acid, a citric acid and the like can be named. Among these carboxylic acids, it is particularly preferable to use the citric acid which exhibits the strong chelating force and forms a hardly-oxidized chelating substance.

Further, carbon remains at the time of baking and hence, the carboxylic acid also functions as a reducing agent. To allow the carboxylic acid to exhibit such a function, in the present invention, it is desirable to set a residual carbon ratio of the carboxylic acid to 3 mass% or more. When the residual carbon ratio of the carboxylic acid is 3 mass% or more, there exists no possibility that the precursor is oxidized with oxygen existing in the non-oxidizing atmosphere. The non-oxidizing atmosphere means an inert gas atmosphere of nitrogen, argon or the like where oxygen concentration is 1000ppm or less or an inert gas atmosphere containing a reducing gas such as hydrogen or carbon monoxide.
Further, it is preferable to set the above-mentioned residual carbon ratio to 20 mass% or less. When the residual carbon ratio exceeds 20 mass%, a residual carbon content after baking becomes excessive. With respect to the residual carbon ratio of the above-mentioned carboxylic acid, the residual carbon ratio is 7 mass% in the case of the tartaric acid, the residual carbon ratio is 12 mass% in the case of the malic acid, the residual carbon ratio is 7 mass% in the case of a citric acid hydrate, and the residual carbon ratio is less than 1 mass% in the case of oxalic acid dehydrate, an acetic acid or the like.
In the present invention, "residual carbon ratio" is a value obtained in such a manner that residual carbon after baking is determined in accordance with a high-frequency induction heating furnace combustion-infrared absorption method stipulated in JIS G 1211 (1995), and the residual carbon is divided by an initial amount of the carboxylic acid.

A content of the carboxylic acid may preferably be set to 0.18 to 0.5 mol for 1 mol of iron, and may more preferably be set to 0.2 to 0.4 mol for 1 mol of iron. When the content of the carboxylic acid is less than 0.18 mol, the above-mentioned chelating effect derived from the carboxylic acid is decreased and hence, the metallic iron and phosphoric acid ion directly react with each other and hence, aggregate particles of sparingly soluble iron phosphate are formed and grown whereby the aqueous solution becomes a creamy high-viscosity material which exhibits color ranging from white to light blue. As a result, the agitation of the aqueous solution becomes insufficient thus giving rise to drawbacks including a drawback that unreacted metallic iron is liable to remain and a drawback that raw materials are not uniformly mixed with each other. On the other hand, when the above-mentioned content of the carboxylic acid exceeds 0.5 mol, synthesized chelate substances of the lithium iron phosphate are uniformly dispersed in the aqueous solution (raw materials being mixed uniformly). However, the residual carbon content after baking becomes excessive. As a result, an apparent discharge capacity of the lithium iron phosphate obtained as a final product is lowered.

As the lithium source, any kind of lithium may be used provided that the lithium is a water-soluble salt. However, it is particularly preferable to use lithium hydroxide or lithium carbonate which does not generate a poisonous gas at the time of baking.

As an atmosphere where the reaction is made by adding the iron particles to the aqueous solution which contains the phosphoric acid, the carboxylic acid and the lithium source, it is necessary to set the oxidizing atmosphere. It is because when a chelating reaction progresses and the oxygen on the surfaces of the iron particles is consumed, the chelating reaction cannot be sustained and hence, priority is assigned to the direct reaction between the metallic iron and the phosphoric acid ion whereby the sparing soluble aggregate particles of the iron phosphate are formed and grown.
In view of such a circumstance, according to the present invention, by bringing the above-mentioned atmosphere at the time of reaction into the oxidizing atmosphere, oxygen is supplemented by properly oxidizing the surfaces of the iron particles thus sustaining the chelating reaction. In the present invention, the oxidizing atmosphere indicates a state where the surfaces of the iron particles in the aqueous solution can be properly oxidized. Such a state is obtained, for example, by bringing an interface of the aqueous solution and an oxygen containing gas into contact with each other, by introducing bubbles or nano-bubbles of dissolved oxygen or oxygen containing gases in the aqueous solution or the like. Further, as a specific manipulation, the agitation under an air atmosphere, bubbling of air or the like can be named.

In the above-mentioned chelating reaction, an aqueous solution temperature may preferably be controlled within a range from 10 to 40°C, and may be more preferably controlled within a range from 20 to 30°C. By controlling the aqueous solution temperature within the range from 10 to 40°C, the surfaces of the iron particles which newly appear due to the consumption of the oxygen by the above-mentioned chelating reaction are properly oxidized as being brought into contact with the dissolved oxygen, the air bubbles or the like in the aqueous solution whereby the chelate substances of the lithium iron phosphate can be continuously formed. When the aqueous solution temperature is below 10°C, the chelating reaction of the iron particles becomes slow and hence, it takes a long time before the reaction is completely finished. On the other hand, when the aqueous solution temperature exceeds 40°C, the oxidation for supplementing the oxygen to the surfaces of the iron particles where the oxygen is consumed cannot catch up with the consumption of oxygen. Accordingly, priority is assigned to the direct reaction between the metallic iron and the phosphoric acid so that the aggregate particles of the sparingly soluble iron phosphate are formed and grown thus giving rise to a possibility that the aqueous solution becomes a creamy high-viscosity material which exhibits color ranging from white to light blue.

According to the present invention, when the iron particles are added to the aqueous solution which contains the phosphoric acid, the carboxylic acid and the lithium source, and the aqueous solution is exposed to the oxidizing atmosphere, the carboxylic acid chelates iron by way of oxygen or a hydroxy group present on the surfaces of the iron particles, and the iron phosphate is formed due to bonding of the phosphoric acid with iron by oxidation whereby some hydrogen in a carboxylic group is replaced with lithium. As a result, it is estimated that chelate substances of the lithium iron phosphate expressed by a following chemical formula 1 are synthesized, and a reaction liquid in which the chelate substances are uniformly dispersed is obtained.

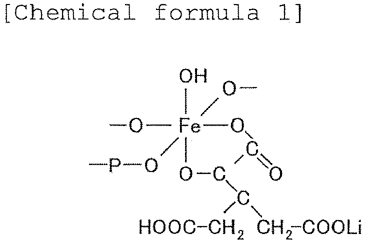

Although the chelate substances of the lithium iron phosphate are present in the reaction liquid in a dispersed state, there may be a case where some chelate substances are present in the form of aggregate particles and become a deposit. In such a case, to make a precursor solution uniform, it is desirable to make the aggregate particles fine by wet mechanical milling. As a wet milling method, a beads mill, a wet jet mill, an ultrasonic irradiation or the like is named.
Further, when an X ray diffraction analysis is applied to.a dried product obtained by drying the reaction liquid (precursor of lithium iron phosphate), no crystalline compound is detected, and an amorphous phase derived from chelate substances which are mixed uniformly at an atomic level is confirmed.

In doping the lithium iron phosphate with other elements, by dissolving in advance a metal or compound which is an element to be doped into the aqueous solution which contains the phosphoric acid, the carboxylic acid and the lithium source, the element to be doped can be uniformly mixed into the aqueous solution. For example, as such metal or compound of the element to be doped, Ti (OH)₄, TiOSO₄·H₂O are named in the case of titanium, FeV, V₂O₅, VOSO₄·2H₂O are named in the case of vanadium, Mg, MgO, Mg(OH)₂ are named in the case of magnesium, WO₃, H₂WO₄ are named in the case of tungsten, and MnCO₃·nH₂O, Mn(CH₃COO)₂ are named in the case of manganese. Here, in case where doped element which is dissolved in advance in the aqueous solution containing the phosphoric acid and the carboxylic acid is reduced due to the addition of the iron particles so that the doped element is brought into a low oxidized state, it is expected that the doped element acts as an electron donor. Although a doping amount may depend on a kind of the element, in general, the replacement of 0.1 mol% or more of iron element is preferable, and particularly the replacement of 0.5 mol% or more of the iron element is more preferable. When the doping amount is less than 0.1 mol% of the iron element, the doping effect can be hardly acquired. An upper limit of the doping amount is largely changed due to factors such as ion radius, valency, coordination number of the element to be doped and hence, the upper limit of the doping amount cannot be necessarily decided. However, when the doping amount exceeds a threshold value, there exists a tendency that characteristics are deteriorated due to the localization of electrons due to the formation of an impurity phase or a change of the band structure.

To dry the reaction liquid, it is preferable to adopt a spray dry method which exhibits favorable dry efficiency. In the spray dry method, a specimen solution is dried by spraying the specimen solution in high-temperature heated air and hence, powder having a uniform shape can be manufactured. In adopting the spray dry method, it is preferable to set an inlet temperature (heating air temperature) in a spray dry device to 150 to 250°C by taking a fact that an oxidizing temperature of a precursor (of the lithium iron phosphate) is approximately 250°C into consideration. When the inlet temperature is set to 150 to 250°C, a reaching temperature of a formed dried product becomes approximately 100 to 150°C although the reaching temperature depends on a balance with a liquid feeding amount. The lithium iron phosphate precursor which is the formed dried product takes a powdery form. A particle size of the precursor is preferably 100 µm or less, is more preferably 80 µm or less, and is still more preferably 50 µm or less. In case where the particle size of the precursor exceeds 100 µm, coarse particles remain when milling performed after baking is insufficient, while when an electrode is formed using the precursor as a positive active material, there exists a possibility that a current collector is damaged.

By baking the lithium iron phosphate precursor at a temperature of 300°C or above under the non-oxidizing atmosphere, H₂O, CO₂, H₂ which are contained in the lithium iron phosphate precursor are eliminated through thermal decomposition, the dried product having the amorphous phase is crystallized whereby a crystalline body of the lithium iron phosphate having the olivine structure is obtained. A baking temperature is preferably 300°C or above, and is more preferably 350 to 700°C. When the baking temperature is below 300°C, the elimination of H₂O, CO₂, H₂ which are volatile components through thermal decomposition becomes insufficient, and also crystallization cannot be acquired. On the other hand, with respect to an upper limit of the baking temperature, when the upper limit exceeds 700°C, the coarseness of obtained crystal particles progresses. Accordingly, the upper limit of the baking temperature is preferably 700°C or below. Baking is performed under the non-oxidizing atmosphere to prevent the oxidization of the lithium iron phosphate precursor.

Next, using the lithium iron phosphate which is the above-mentioned baked product as a primary baked product, a carbon source is mixed into the primary baked product and, then, the mixture is subjected to secondary baking. Due to such secondary baking, crystallinity of the lithium iron phosphate may be enhanced and, at the same time, conductivity of the lithium iron phosphate can be enhanced by covering a surface of the lithium iron phosphate with carbon or by adhering carbon to the surface of the lithium iron phosphate.

As the carbon source to be mixed to the lithium iron phosphate, a substance which forms carbon through thermal decomposition at the time of secondary baking or conductive carbon is used. The substance which forms carbon through thermal decomposition at the time of secondary baking may preferably be a substance which is melted at the time of secondary baking and wets a surface of lithium iron phosphate particles. For example, a saccharide such as glucose, fructose, maltose, sucrose, ascorbic acid or erythorbic acid, carboxymethylcellulose, acenaphthylene, quinoline insoluble-less pitch (quinoline insoluble ≤ 0.1 mass%, ash ≤ 0. 01 mass%) or the like can be used. As the conductive carbon, for example, carbon black, acetylene black, Ketj en black, VGCF, carbon nano fiber, fullerene or the like can be used. These substances can be used in a single form or in a combination of the plurality of substances.

As a method for mixing the carbon source into the primary baked product, a method where the carbon source is added to the primary baked product before or after the primary baked product is pulverized by wet or dry milling, and the mixture is pulverized using a ball mill, a jet mill or the like can be named. An addition amount of the carbon source is preferably set such that an amount of carbon contained in the lithium iron phosphate after the secondary baking becomes 1 to 5 mass%, and the addition amount of the carbon source may more preferably be set such that such carbon content becomes 1.5 to 4 mass%. When the carbon content is less than 1 mass%, conductivity of the lithium iron phosphate becomes insufficient thus giving rise to a possibility that the performance of the lithium iron phosphate particles which constitute a positive active material cannot be sufficiently taken out. On the other hand, when the carbon content exceeds 5 mass%, there exists a tendency where apparent discharge capacity is lowered. When the secondary baking is performed, the primary baking is preferably performed under the non-oxidizing atmosphere at a temperature of 350 to 400°C. Although the lithium iron phosphate is surely crystallized by being baked at a temperature of 350°C or above, the lithium iron phosphate particles grow along with the elevation of temperature and hence, it is sufficient to perform the primary baking at a temperature of 400°C.

The secondary baking is preferably performed at a temperature of 550 to 750°C under the non-oxidizing atmosphere, and the secondary baking is more preferably performed at a temperature of 600 to 700°C. When a substance which generates pyrolytic carbon is used as the carbon source, the generation of the pyrolytic carbon becomes insufficient at a temperature below 550°C thus giving rise to a possibility that conductivity of the lithium iron phosphate obtained after the secondary baking cannot be sufficiently exhibited. On the other hand, when the secondary baking is performed at a temperature exceeding 750°C, there is a possibility that the lithium iron phosphate particles become coarse.

As described above, the lithium iron phosphate precursor in which the raw materials are uniformly mixed at an atomic level is obtained in such a manner that the iron particles containing 0.5 mass% or more of oxygen are added to the aqueous solution containing the phosphoric acid, the carboxylic acid and the lithium source, the chelate substances of the lithium iron phosphate are synthesized by making these elements react with each other under the oxidizing atmosphere, and the chelate substances of the lithium iron phosphate are dried. Then, by baking the lithium iron phosphate precursor, the lithium iron phosphate having high performance can be obtained as an inexpensive positive active material.

The inventors of the present invention filed the international application PCT/JP 2010/001691 on a method for producing lithium iron phosphate which includes following steps;
an aqueous solution preparing step of preparing an aqueous solution containing a phosphoric acid and a carboxylic acid;
a first forming step of adding iron particles containing 0.5 mass% or more of oxygen to the aqueous solution, and making the phosphoric acid and the carboxylic acid in the aqueous solution and the iron particles react with each other under an oxidizing atmosphere, to form a first reaction liquid;
a second forming step of adding a lithium source to the first reaction liquid obtained in the first forming step, to form a second reaction liquid;
a precursor forming step of drying the second reaction liquid to form a lithium iron phosphate precursor; and
a primary baking step of baking the lithium iron phosphate precursor under a non-oxidizing atmosphere thus obtaining the lithium iron phosphate.
According to the present invention, two steps, that is, the first forming step for forming the first reaction liquid and the second forming step for forming the second reaction liquid in the international application PCT/JP 2010/001691 are carried out in the following one synthesizing step.
"a synthesizing step of adding iron particles containing 0.5 mass% or more of oxygen to an aqueous solution containing a phosphoric acid, a carboxylic acid and a lithium source, and making the components contained in the aqueous solution and the iron particles react with each other under an oxidizing atmosphere, to form a reaction liquid".

Accordingly, the present invention has following advantages compared to the invention described in the international application PCT/JP 2010/001691.
(a) Raw materials can be mixed collectively by one synthesizing step.
(b) It is possible to suppress a vigorous reaction which takes place at an initial stage of the first forming step the international application PCT/JP 2010/001691.

### Examples

Although the present invention is specifically explained using examples hereinafter, the present invention is not limited to these examples.

### (Example 1)

10 mol of phosphoric acid of 85 mass%, 2 mol of citric acid hydrate and 5 mol of lithium carbonate were dissolved in 2000g of distilled water, 10 mol of iron powder (produced by JFE Steel Corporation, oxygen content: 0.68 mass%, average particle size: 80 µm, apparent density: 3.18 g/cm³) was added to the mixture solution, and a reaction between these materials was continued for 1 day while agitating these materials under an air atmosphere at a liquid temperature of 25 to 30°C. Then, the reaction liquid was dried by a spray dryer (FOC16 made by OHKAWARA KAKOHKI CO.,LTD.) at an inlet temperature of 200°C thus obtaining dried powder having an average particle size of approximately 30 µm in SEM observation. Primary baking was applied to the dried powder in a nitrogen gas flow at a temperature of 400°C for 5 hours. Then, as a carbon source, 40 g of ascorbic acid was added to the whole primary baking product, and the primary baking product was subjected to wet milling and mixing using a ball mill. Subsequently, the obtained mixture was dried and, thereafter, secondary baking was applied to the obtained mixture in a nitrogen gas flow at a temperature of 700°C for 10 hours. Finally, the baking mixture was subjected to screening using a sieve having meshes of 75 µm thus preparing lithium iron phosphate.
The oxygen content of the iron powder was determined using TC436 made by LECO Corporation.
The apparent density of the iron powder is measured in accordance with JIS Z 2504 (2000).

### (Example 2)

Lithium iron phosphate was prepared in the same manner as the Example 1 except for that 2 mol of malic acid was used in place of the citric acid hydrate in the Example 1.

### (Example 3)

Lithium iron phosphate was prepared in the same manner as the Example 1 except for that 2 mol of tartaric acid was used in place of the citric acid hydrate in the Example 1.

### (Example 4)

Lithium iron phosphate was prepared in the same manner as the Example 1 except for that an amount of the citric acid hydrate was set to 2.5 mol, and the ascorbic acid was not added to the primary baking product in the Example 1.

### (Example 5)

Lithium iron phosphate was prepared in the same manner as the Example 1 except for that iron powder (produced by KISHIDA CHEMICAL Co. , Ltd. , oxygen content: 1.55 mass%, average particle size: 70 µm, apparent density: 2.47 g/cm³) was used in the Example 1.

### (Example 6)

Lithium iron phosphate was prepared in the same manner as the Example 1 except for that 0.05 mol (replacing 1 mol% of iron element) of vanadium pentoxide V₂O₅ which is a vanadium source was added to and dissolved in the mixed solution containing the phosphoric acid, the citric acid hydrate and the lithium carbonate, and 9.9 mol of iron powder equal to the iron powder used in the Example 1 was added to the mixed solution in the Example 1.

### (Example 7)

Lithium iron phosphate was prepared in the same manner as the Example 1 except for that 0.15 mol (replacing 1 mol% of iron element) of titanyl sulfate which is a titanium source was added to and dissolved in the mixed solution containing the phosphoric acid, the citric acid hydrate and the lithium carbonate, and 9.9 mol of iron powder equal to the iron powder used in the Example 1 was added to the mixed solution in the Example 1.

### (Example 8)

Lithium iron phosphate was prepared in the same manner as the Example 1 except for that 0.1 mol (replacing 1 mol% of iron element) of magnesium oxide which is a magnesium source was added to and dissolved in the mixed solution containing the phosphoric acid, the citric acid hydrate and the lithium carbonate, and 9.9 mol of iron powder equal to the iron powder used in the Example 1 was added to the mixed solution in the Example 1.

### (Example 9)

Lithium iron phosphate was prepared in the same manner as the Example 1 except for that 0.1 mol (replacing 1 mol% of iron element) of manganese acetate which is a manganese source was added to and dissolved in the mixed solution containing the phosphoric acid, the citric acid hydrate and the lithium carbonate, and 9.9 mol of iron powder equal to the iron powder used in the Example 1 was added to the mixed solution in the Example 1.

### (Comparative example 1)

Lithium iron phosphate was prepared in the same manner as the Example 1 except for that iron powder (produced by JFE Steel Corporation, oxygen content: 0.41 mass%, average particle size: 80 µm, apparent density: 2.55 g/cm³) was used in the Example 1.

### (Comparative example 2)

Lithium iron phosphate was prepared in the same manner as the Example 1 except for that the agitation of the solution after the iron powder was added was performed under a nitrogen atmosphere in the Example 1.

### (Comparative example 3)

Lithium iron phosphate was prepared in the same manner as the Example 1 except for that 2 mol of oxalic acid dehydrate was used in place of the citric acid hydrate in the Example 1.

With respect to respective lithium iron phosphates which were prepared by the Examples 1 to 9 and the comparative examples 1 to 3, identification analysis based on an X-ray diffraction analysis and quantitative analysis of carbon were performed. Primary particle sizes were also measured with respect to the respective lithium iron phosphates. The X-ray diffraction analysis was performed using UltimaIV (X-Ray: Cu-Kα1) made by Rigaku Corporation. The quantitative analysis of carbon was performed using EMIA-620 made by HORIBA, Ltd. by determining a carbon content of the lithium iron phosphate. The primary particle size was obtained by the X-ray diffraction analysis using Scherrer equation.

Further, with respect to the respective lithium iron phosphates which were prepared by the Examples 1 to 9 and the comparative examples 1 to 3, discharge capacity was measured using a following method. A cathode was prepared in such a manner that a paste having a composition consisting of lithium iron phosphate, acetylene black, polyvinylidene fluoride (KFL #1320 made by KUREHA CORPORATION) at a mass ratio of 86:4:10 was applied to a current collector formed of an aluminum foil by coating at 10 mg/cm². An anode was prepared by assembling a half cell (made by Hohsen Corp.) using metallic lithium. An electrolyte having a composition consisting of 1M-LiPF₆/EC (ethylene carbonate) and EMC (ethylmethyl carbonate) at a mass ratio of 3:7 was used. A measuring condition was set such that the discharge capacity is obtained by performing a constant current charge up to 4.0 V at 0.2 mA/cm² and, thereafter, by performing a constant current discharge down to 2.5 V at 0.2 mA/cm².

The result of measurement of the above-mentioned identification analysis, carbon content, primary particle size and discharge capacity is shown in Table 1. As can be clearly understood from Table 1, in all Examples 1 to 9, the carbon content is 1.5 mass% or more, and the primary particle size is 100 nm or less, and olivine lithium iron phosphate possessing high discharge capacity was obtained. Particularly, the discharge capacity in the Examples 6 to 9 is slightly larger than the discharge capacity in the Examples 1 to 5 and hence, it is estimated that such a discharge capacity enhancing effect is brought about by doping. On the other hand, the comparative examples 1 to 3 cannot obtain lithium iron phosphate possessing sufficient discharge capacity. It is estimated that phosphorus, iron and lithium are not mixed uniformly at an atomic level in the comparative examples 1 to 3.

[Table 1]

**Table 1**

| | Formed phase | Carbon content (mass%) | Primary particle size (nm) | Discharge capacity (mAh/g) |
|---|---|---|---|---|
| Example 1 | LiFePO₄ (olivine) | 1.9 | 70 | 157 |
| Example 2 | LiFePO₄ (olivine) | 2.0 | 72 | 155 |
| Example 3 | LiFePO₄ (olivine) | 1.9 | 72 | 155 |
| Examples 4 | LiFePO₄ (olivine) | 2.1 | 70 | 157 |
| Examples 5 | LiFePO₄ (olivine) | 2.0 | 70 | 156 |
| Examples 6 | LiFe_{0.99}V_{0 01}PO₄ (olivine) | 2.0 | 62 | 159 |
| Example 7 | LiFe_{0.99}Tio_{0 01}PO₄ (olivine) | 2.0 | 64 | 158 |
| Example 8 | LiFe_{0.99}Mg_{0 01}PO₄ (olivine) | 2.0 | 62 | 159 |
| Example 9 | LiFe_{0.99}Mn_{0 01}PO₄ (olivine) | 2.0 | 60 | 158 |
| Comparative example 1 | LiFePO₄ (olivine) | 1.9 | 88 | 140 |
| Comparative example 2 | LiFePO₄ (olivine) | 1.9 | 74 | 142 |
| Comparative example 3 | LiFePO₄ (olivine), impurity phase | 1.2 | 90 | 135 |

### Industrial Applicability

The present invention provides a method for producing lithium iron phosphate possessing a high discharge capacity as an inexpensive positive active material by using inexpensive iron particles as an iron source.

## Claims

1. A method for producing lithium iron phosphate comprising:
a synthesizing step of adding iron particles containing 0.5 mass% or more of oxygen to an aqueous solution containing a phosphoric acid, a carboxylic acid and a lithium source, and causing components contained in the aqueous solution and the iron particles to react with each other under an oxidizing atmosphere, and thereby form a reaction liquid;
a precursor forming step of drying the reaction liquid obtained in the synthesizing step, to form a lithium iron phosphate precursor; and
a primary baking step of baking the lithium iron phosphate precursor obtained in the precursor forming step under a non-oxidizing atmosphere, to obtain the lithium iron phosphate.

2. The method according to claim 1, further comprising a secondary baking step of mixing the lithium iron phosphate obtained in the primary baking step and a carbon source, and baking the mixture under a non-oxidizing atmosphere thus obtaining lithium iron phosphate whose surface is covered with carbon.

3. The method according to claim 1 or 2, wherein a content of the carboxylic acid is 0.18 to 0.5 mol for 1 mol of iron in the iron particles.

4. The method according to any one of claims 1 to 3, wherein a residual carbon rate of the carboxylic acid is 3 mass% or more.

5. The method according to any one of clams 1 to 4, wherein the carboxylic acid is at least one selected from the group consisting of a tartaric acid, a malic acid and a citric acid.

6. The method according to any one of claims 1 to 5, wherein metal or a compound which is an element to be doped is dissolved in the aqueous solution containing the phosphoric acid, the carboxylic acid and the lithium source in advance.

7. The method according to any one of claims 1 to 6, wherein the lithium iron phosphate is a positive active material for a secondary battery.
